# EUROPÄISCHE PATENTSCHRIFT

(11) **EP 3 364 546 B1**
(45) Veröffentlichungstag und Bekanntmachung des Hinweises auf die Patenterteilung: **31.03.2021**
(21) Anmeldenummer: 17157141.7
(22) Anmeldetag: 21.02.2017
(51) Int. Cl.: H04B 3/54, H04B 7/155, H04L 12/911, H04W 72/02, H04W 72/04, H04L 5/00

(54) **VERFAHREN UND SYSTEM ZUR DATENÜBERTRAGUNG ÜBER EINE HOCH- ODER MITTELSPANNUNGSLEITUNG**
METHOD AND SYSTEM FOR DATA TRANSMISSION OVER A HIGH OR MEDIUM VOLTAGE LINE
PROCÉDÉ ET SYSTÈME POUR LA TRANSMISSION DE DONNÉES SUR UNE LIGNE DE MOYEN TENSION OU HAUTE TENSION

(43) Veröffentlichungstag der Anmeldung: 22.08.2018
(73) Patentinhaber: Siemens Aktiengesellschaft, 80333 München (DE)
(72) Erfinder: Kussyk, Jaroslaw, 1170 Wien (AT)

(56) Entgegenhaltungen:
- WO-A1-2005/109759
- AT-B- 408 595
- US-A1- 2012 063 497
- US-A1- 2016 323 015

## Beschreibung

Die Erfindung betrifft ein Verfahren zur Datenübertragung über eine Hoch- oder Mittelspannungsleitung gemäß dem Oberbegriff des Anspruchs 1 sowie ein entsprechendes System gemäß Anspruch 10.

In einem Kommunikationsnetzwerk, z. B. bei einer Signalübertragung über ein elektrisches Energieversorgungsnetz oder mittels Funkwellen, wird oft ein (orthogonales) Frequenzmultiplexverfahren (engl. "(orthogonal) frequency division multiplexing -(O)FDM") oder eine Kombination aus den Techniken FDM und OFDM verwendet. Dabei kann eine gleichzeitige Kommunikation zwischen Netzwerkstationen/-knoten auf mehreren Kommunikationsteilstrecken (engl. "multihop network") durchgeführt werden. Eine Netzwerkstation, in der Nachrichtentechnik häufig auch als Netzwerkknoten bezeichnet, besteht im Wesentlichen aus einem Sender, einem Empfänger (beide zusammen werden als Transceiver bezeichnet) und einem Netzwerkcontroller, der über eine Nutzerschnittstelle Nachrichten mit Nutzern der Netzwerkstation und /oder anderen Netzwerkstationen austauscht. Zusätzlich kann der Netzwerkcontroller die empfangenen Nachrichten über den Sender oder die Nutzerschnittstelle an weitere Netzwerkknoten weiterleiten.

In einem solchen im Allgemeinen räumlich verteilten Kommunikationsnetzwerk kann es zu einer wechselseitigen Beeinflussung der Stationen kommen, wenn ein erster und ein zweiter Netzwerkknoten eine Teilstrecke bilden und dabei dieselben Frequenzressourcen verwenden, d.h. denselben Frequenzkanal für die Signalübertragung, wie ein dritter Netzwerknoten. Bei der Signalübertragung kann es sich dabei um mindestens eine der beiden Übertragungsrichtungen einer Duplexverbindung handeln.

Bei der Trägerfrequenz-Nachrichtenübertragung über Hochspannungsleitungen (TFH) wird üblicherweise eine "frequency division duplex"-Verbindung (FDD) zwischen zwei Netzwerkknoten (TFH-Vorrichtungen), im Folgenden auch Datenübertragungsvorrichtungen genannt, aufgebaut. Für die FDD-Verbindungen mehrerer Netzwerkknotenpaare werden in der Regel verschiedene Frequenzkanäle verwendet. Allerdings können die gleichen Frequenzkanäle bei ausreichend voneinander entfernten TFH-Vorrichtungen zumindest für eine der Senderichtungen wiederverwendet werden. Wurden die Entfernung oder ein mögliches Übersprechen zwischen benachbarten Hochspannungsleitungen nicht ausreichend berücksichtigt, kann es in den von zwei Netzwerkknotenpaaren gemeinsam genutzten Frequenzkanälen zu der oben genannten Beeinflussung kommen.

In einem räumlich ausgedehnten Netzwerk mit mehreren solchen Teilstrecken erfolgt die Zuordnung separater Frequenzbereiche aus den zur Verfügung stehenden Frequenzressourcen innerhalb eines Frequenzbandes oder mehrerer Teilfrequenzbänder zu den einzelnen Teilstrecken im Rahmen einer Frequenzplanung. Diese findet in der Regel vor der Inbetriebnahme der einzelnen Netzwerkknoten bzw. Teilstrecken statt. Da die zur Verfügung stehenden Frequenzressourcen begrenzt sind, werden sie auf voneinander ausreichend im Sinne der wechselseitigen Beeinflussung entkoppelten Teilstrecken wiederverwendet.

Dabei ist oft im Vorhinein das Ausmaß der Entkopplung der Teilstrecken zueinander in den diesen Teilstrecken zugeordneten und ev. sich zumindest teilweise überlappenden Frequenzbereichen nicht vollständig bekannt. Auch ein Ausmaß der Entkopplung der Teilstrecken zueinander in den sich nicht überlappenden oder benachbarten Frequenzbereichen ist oft nicht vorher bekannt. Als Maß der Entkopplung kann beispielsweise ein Fremdsignalpegel oder ein Fremdsignal-zu-Rauschen Verhältnis an einem der Empfänger der Teilstrecke und/oder eine Signaldämpfung zwischen einem fremden Sender und einem der Empfänger der Teilstrecke dienen.

Deshalb werden bei der Frequenzplanung oft eine räumliche Reserve bei einer Wiederverwendung der Frequenzressourcen, d. h. ein größerer gewählter Abstand zwischen den Teilstrecken, die die gleichen Frequenzressourcen verwenden, vorgesehen. Außerdem wird ein größerer Sicherheitsabstand im Frequenzbereich zu den benachbarten Teilfrequenzbändern vorgesehen.

In der bisherigen Praxis wurden im Zuge einer Raum-Frequenzplanung den verschiedenen FDD-Verbindungen jeweils verschiedene Frequenzkanäle bzw. Frequenzkanalpaare mit fixer Bandbreite zugeordnet. Die einzelnen Frequenzkanäle wurden zumindest für eine der beiden Senderichtungen einer weiteren FDD-Verbindung mit einer gewissen räumlichen Reserve zugeteilt. Dies verursacht eine nicht optimale räumliche Nutzung des zur Verfügung stehenden Frequenzbereichs durch ein Netzwerk, das aus mehreren FDD-Verbindungen besteht, die eine kontinuierliche bidirektionale Signalübertragung erfordern. Der TFH steht ein relativ schmaler Frequenzbereich von ca. 30kHz bis 500kHz (in manchen Regionen bis 1MHz) zur Verfügung. Auch in der Funktechnik sind die Frequenzressourcen meistens knapp.

Aus der bisher unveröffentlichten europäischen Patentanmeldung Nr. 17157143.3 ist ferner ein Verfahren zur Datenübertragung über eine Hoch- oder Mittelspannungsleitung bekannt, bei dem ein Schutzsignal-Frequenzkanal für die Übertragung eines Schutzsignals reserviert ist, und primäre Frequenzkanäle zur Datenübertagung verwendet werden, wobei der Schutzsignal-Frequenzkanal zusätzlich zur Übertragung von Zusatzdaten genutzt wird. Aus der bisher unveröffentlichten europäischen Patentanmeldung Nr. 17157153.2 ist eine Weiterbildung des Verfahrens zur Vermeidung eines sog. "exposed-stationproblems" bekannt. Ferner ist aus der bisher unveröffentlichten europäischen Patentanmeldung Nr. 17157147.4 eine Weiterbildung des Verfahrens zur Vermeidung eines sog. "hiddenstation-problems" bekannt.

Aus der Schrift US 2016/323015 A1 ist ein verteiltes Antennen- und Übertragungssystem bekannt, welches Kommunikationszellen (Antennen und Basisstationen) mit geringer Infrastrukturaufwand eine Netzverbindung für einen Datenrücktransport zur Verfügung stellt. Für die Übertragung werden so genannte Downstream-Frequenzkanäle (Downlink) und Upstream-Frequenzkanäle (Uplink) genutzt, wobei bei einer asymmetrischen Kommunikation das Uplink-Frequenzband enger oder breiter als das Downlink-Frequenzband sein kann.

Weiterhin ist aus der Schrift WO 2005/109759 A1 ein Verfahren zur Signalübertragung in einem Funk-Kommunikationssystem bekannt, welches zumindest zwei Frequenzkanäle bereitstellt und für eine Kommunikationsübertragung zwischen zwei asynchron betriebenen Stationen über diese Frequenzkanäle ausgelegt ist, wobei die zur Verfügung stehenden Frequenzkanäle möglichst effizient genutzt werden sollen. Dabei werden über einen Frequenzkanal der Frequenzkanäle Signale für eine Abstimmung von Sende- und Empfangsbereitsschaft übertragen.

Die Schrift US 2012/0063497 A1 beschreibt ein System sowie ein Verfahren zum Implementieren von Anwendungsprofilen und Geräteklassen in einer Powerline Communications-(PLC)-Umgebung. Dabei können PLC-Einheiten Frequenzbänder anhand der jeweils zugeordneten Anwendungsprofile und Geräteklassen für eine Kommunikation zugeordnet werden. Weiterhin können einer PLC-Einheit auf Anfrage ungenutzte Frequenzbänder zumindest teilweise für die Kommunikation zur Verfügung gestellt werden.

Außerdem ist aus der Schrift AT 408 595 B eine Datenübertragungssystem bekannt, bei welchem zwischen einer zentralen Stelle und einer Vielzahl an Teilnehmern unter Verwendung von Übertragungskanälen auf einer Leitung Daten übertragen werden.

Ausgehend von bekannten Verfahren zur Datenübertragung über eine Hoch- oder Mittelspannungsleitung stellt sich an die Erfindung die Aufgabe, ein Verfahren anzugeben, mit dem eine vergleichsweise höhere Datenübertragungsrate erreicht werden kann.

Die Erfindung löst diese Aufgabe durch ein Verfahren gemäß Anspruch 1, wobei einer ersten und einer zweiten Datenübertragungsvorrichtung ein erster primärer und ein zweiter primärer Frequenzkanal zur Datenübertragung zugeordnet sind. Die beiden primären Frequenzkanäle weisen jeweils vorgegebene Frequenzkanalgrenzen und einen Frequenzabstand auf, welcher einen vorher festgelegten maximalen Frequenzabstand unterschreitet, wodurch die beiden primären Frequenzkanäle als benachbart bezeichnet werden. Die beiden Datenübertragungsvorrichtungen übermitteln jeweils über einen sekundären Frequenzkanal eine Frequenzkanal-Belegungsinformation, die der jeweils anderen Datenübertragungsvorrichtung den selbst genutzten primären Frequenzkanal und die jeweiligen Frequenzkanalgrenzen angibt. Die Frequenzkanalgrenzen der beiden primären Frequenzkanäle werden von den Datenübertragungsvorrichtungen derart verändert, dass die Frequenzkanäle verbreitert werden, indem der Frequenzabstand vermindert wird. Die Datenübertragungsvorrichtungen senden dann eine aktualisierte Belegungsinformation aus und erkennen daran, dass sich bei einer Umsetzung der Frequenzkanalnutzung gemäß der aktualisierten Belegungsinformation eine Überlappung der veränderten Frequenzkanäle ergeben würde. Darauf verändern die Datenübertragungsvorrichtungen die jeweiligen Frequenzkanalbreiten derart, dass keine Überlappung auftritt.

Im Sinne der Erfindung ist ein Frequenzkanal ein Abschnitt im Frequenzspektrum, der bei einer vorgegebenen Rasterung zahlreiche einzelne Frequenzen enthält und jeweils eine untere und eine obere Frequenz aufweist. Eine untere und eine obere Frequenz bilden die Frequenzkanalgrenzen. Dabei ist zu berücksichtigen, dass beispielsweise ein primärer Übertragungskanal mit gegebenen Kanalgrenzen gewissermaßen eine "Unterbrechung" in der Frequenzbelegung aufweisen kann, wenn innerhalb der Kanalgrenzen ein schmaler sekundärer Kanal angeordnet ist. Dabei belegt ein solcher primärer Kanal, der durch einen sekundären Kanal "unterbrochen" wird, gemeinsam mit dem sekundären Kanal ein Frequenzband.

Ein geeigneter maximaler Frequenzabstand, der unterschritten werden muss, beträgt beispielsweise mindestens ein Zweifaches einer zugeordneten Frequenzkanalbreite, d.h. der Breite eines von den Frequenzkanalgrenzen eingefassten Bereichs auf dem Frequenzspektrum. Derart im Frequenzspektrum nahe beieinander angeordnete Frequenzkanäle werden auch als benachbarte Frequenzkanäle bezeichnet.

Es ist ein Vorteil der Erfindung, dass bisher ungenutzte Frequenzlücken zwischen den primären Frequenzkanälen auf einfache Weise dynamisch während des Betriebs der Vorrichtungen und in Abstimmung zwischen den Vorrichtungen aufgeteilt werden können, um die Datenübertagungsgeschwindigkeit zu erhöhen, indem alle verfügbaren Frequenzen zur Datenübertragung eingesetzt werden. Diese dynamische Anpassung kann beispielsweise auch regelmäßig durchgeführt werden, so dass stets eine im Vergleich zu bisherigen Verfahren effizientere Verwendung der Frequenzressourcen sichergestellt ist.

Hauptvorteil der vorgeschlagenen Methode liegt in der vollständigen Vermeidung der Kollisionen in der gemeinsamen Nutzung von Frequenzressourcen bzw. in der automatischen Anpassung deren Wiederverwendung durch mehrere TFH-Verbindungen/- Geräte bzw. in der Vermeidung von Störungen in der Datenübertragung. Außerdem sind keine Reserven bei den Schutzintervallen im Frequenzbereich zwischen benachbarten Frequenzkanälen notwendig. Dies ermöglicht einen geringeren Aufwand in der anfänglichen Frequenzplanung eines TFH-Systems.

Bisher war auf dem Gebiet der TFH-Technik eine manuelle Planung einzelner TFH-Verbindungen üblich. Die vorgeschlagene Methode stellt einen neuartigen und innovativen Ansatz für eine adaptive Nutzung der vorhandenen Frequenzressourcen in der TFH-Technik dar.

Das Verfahren ermöglicht den Aufbau eines adaptiven zellularen Netzwerks mit einer dynamischen Frequenzkanalnutzung und damit eine bessere Ausnutzung der zur Verfügung stehenden Frequenzressourcen, wodurch ein höherer Datendurchsatz beispielsweise in einem TFH-Gesamtsystem erzielt werden kann.

In einer bevorzugten Ausführungsform des erfindungsgemäßen Verfahrens wird der Frequenzabstand so weit vermindert, dass die veränderten primären Frequenzkanäle im Frequenzspektrum direkt aneinanderstoßen. Dies hat den Vorteil, dass alle verfügbaren Frequenzen den benachbarten Kanälen zugeordnet werden.

In einer weiteren bevorzugten Ausführungsform des erfindungsgemäßen Verfahrens teilen die Datenübertragungsvorrichtungen den Frequenzabstand im Wesentlichen zu gleichen Teilen auf die beiden primären Frequenzkanäle auf. Dies hat den Vorteil, dass beide Vorrichtungen Kanäle mit vergleichbarer Datenübertragungskapazität aufweisen.

In einer weiteren bevorzugten Ausführungsform des erfindungsgemäßen Verfahrens weist die Belegungsinformation zusätzlich eine vorgesehene Bandbreite und/oder eine vorgesehene Übertragungsrate des jeweiligen primären Übertragungskanals auf, anhand derer die Datenübertragungsvorrichtungen den Frequenzabstand derart auf die beiden primären Frequenzkanäle aufteilen, dass für jeden der beiden primären Frequenzkanäle die vorgesehene Bandbreite und/oder die vorgesehene Übertragungsrate erzielt wird. Dies ist von Vorteil, weil auf diese Weise besondere Anforderungen an die Datenübertagungsgeschwindigkeit bestimmter Vorrichtungen erfüllt werden können. Es erfolgt über die sekundären Frequenzkanäle also eine gegenseitige Anfrage an die jeweils andere Datenübertragungsvorrichtung, die Grenzen der bisher benutzten Kanäle zu verschieben und bisher nicht genutzte Frequenzbereiche aufzuteilen. Wird bei der Anfrage eine Überlappung bzw. Kollision der angefragten neuen Grenzen der Kanäle festgestellt, so werden die Grenzen neu und kollisionsfrei angepasst, bevor Störungen auftreten können. Eine Überlappung wird so vor Ihrem Auftreten sicher verhindert.

In einer weiteren bevorzugten Ausführungsform des erfindungsgemäßen Verfahrens ist mindestens einer der beiden Frequenzkanäle als Anker-Frequenzkanal derart festgelegt, dass zwar eine Veränderung, jedoch keine komplette Verschiebung des Frequenzkanals jenseits des Ankerkanals möglich ist. Dabei bedeutet in diesem Zusammenhang eine komplette Verschiebung des Frequenzkanals, dass eine vorgegebene Ankerfrequenz sich nicht mehr innerhalb des verbreiterten und ggf. verschobenen Frequenzkanals wiederfindet. In gleicher Weise bedeutet eine komplette Verschiebung des Frequenzkanals, dass ein vorgegebener Anker-Frequenzkanal nicht mehr in Gänze im verbreiterten und ggf. verschobenen Frequenzkanals enthalten ist.

Diese Verankerung des entsprechenden Kanals an einer bestimmten Stelle an einer Ankerfrequenz im Frequenzspektrum hat den Vorteil, dass die vorher festgelegte Frequenzplanung bei Bedarf teilweise aufrecht erhalten werden kann.

In einer weiteren bevorzugten Ausführungsform des erfindungsgemäßen Verfahrens werden in einem Netzwerk mit einer Mehrzahl von Datenübertragungsvorrichtungen, bei Ausfall einer Datenübertragungsvorrichtung, die dieser Datenübertragungsvorrichtung zugeordneten Frequenzkanäle nicht vollständig auf andere Frequenzkanäle der verbliebenen Datenübertragungsvorrichtungen aufgeteilt. Dies hat den Vorteil, dass bei Wiedereinschalten der ausgefallenen Datenübertragungsvorrichtung zumindest ein Datenübertragungskanal zur Verfügung steht. Alternativ oder zusätzlich zu dieser Ausführungsform können die der ausgefallenen Datenübertragungsvorrichtung zugeordneten Kanäle komplett aufgeteilt werden, wenn eine vorher festgelegte Zeitspanne ohne Wiedereinschaltung verstrichen ist.

In einer weiteren bevorzugten Ausführungsform des erfindungsgemäßen Verfahrens werden die sekundären Frequenzkanäle mit einer höheren Sendeleistung als der jeweiligen Sendeleistung der primären Frequenzkanäle betrieben. Dies erhöht die Reichweite und stellt sicher, dass alle Belegungsinformationen ihr vorgesehenes Ziel erreichen.

In einer weiteren bevorzugten Ausführungsform des erfindungsgemäßen Verfahrens werden die sekundären Frequenzkanäle mit einem anderen Übertragungsverfahren als die primären Frequenzkanäle betrieben, das eine größere Reichweite der Signalübertragung in den sekundären Frequenzkanälen bewirkt.

In einer weiteren bevorzugten Ausführungsform des erfindungsgemäßen Verfahrens werden als sekundäre Frequenzkanäle jeweils Schutzsignal-Frequenzkanäle verwendet. Dies hat den Vorteil, dass bisher die Schutzsignal-Frequenzkanäle nicht für weitergehende Informationsübertragung verwendet werden.

Ausgehend von bekannten Systemen zur Datenübertragung über eine Hoch- oder Mittelspannungsleitung stellt sich an die Erfindung die Aufgabe, ein System anzugeben, mit dem eine vergleichsweise höhere Datenübertragungsrate erreicht werden kann.

Die Erfindung löst diese Aufgabe durch ein System gemäß Anspruch 10. Bevorzugte Ausführungsformen sind in den Ansprüchen 11 bis 15 angegeben. Es ergeben sich für das erfindungsgemäße System und seine Ausführungsformen sinngemäß die gleichen Vorteile wie eingangs für das erfindungsgemäße Verfahren erläutert.

Wie eingangs für das erfindungsgemäße Verfahren erläutert, kann mittels des Systems eine effizientere Nutzung von Frequenzkanälen erreicht werden. Das System kann dabei zahlreiche einzelne für bidirektionale Datenkommunikation eingerichtete Datenübertragungseinrichtungen aufweisen, die die zur Verfügung stehenden Frequenzkanäle entsprechend untereinander aufteilen. Ein System im Sinne der Erfindung kann folglich ein ganzes Netzwerk von Datenübertragungseinrichtungen aufweisen.

Im Folgenden soll das erfindungsgemäße Verfahren anhand eines Ausführungsbeispiels und einiger Figuren genauer erläutert werden.

Die Figuren zeigen in schematischer Darstellung:
Figur 1 ein erstes System mit zwei Paaren von Vorrichtungen zur Datenübertragung, und
Figur 2 ein erstes Beispiel für eine Frequenzkanalbelegung gemäß initialer Frequenzplanung, und
Figur 3 das Beispiel gemäß Figur 2 nach einer erfindungsgemäßen Frequenzkanalanpassung, und
Figur 4 ein zweites Beispiel für eine Frequenzkanalbelegung gemäß initialer Frequenzplanung, und
Figur 5 das Beispiel gemäß Figur 4 nach einer erfindungsgemäßen Frequenzkanalanpassung, und
Figur 6 ein Beispiel für einen Prinzipaufbau und eine Frequenzkanalbelegung zwischen zwei Datenübertragungsvorrichtungen.

Zur Lösung oder zumindest einer Verringerung des Problems der eingangs erläuterten nicht-optimalen Nutzung der Raum-Frequenz-Ressourcen in einem räumlich ausgedehnten Kommunikationsnetzwerk (z. B. bei einer Signalübertragung über ein elektrisches Energieversorgungsnetz (TFH) oder mittels Funkwellen) auf Basis eines (orthogonalen) Frequenzmultiplexverfahrens für die gleichzeitige Kommunikation zwischen Netzwerkstationen/-knoten auf mehreren Kommunikationsteilstrecken schlägt die Erfindung ein verbessertes Verfahren vor. Es dient einer Koordinierung der Wiederverwendung der Frequenzressourcen für eine kollisionsfreie Kommunikation zwischen den TFH-Vorrichtungen über die primären Übertragungskanäle, wobei zusätzliche sekundäre Übertragungskanäle verwendet werden.

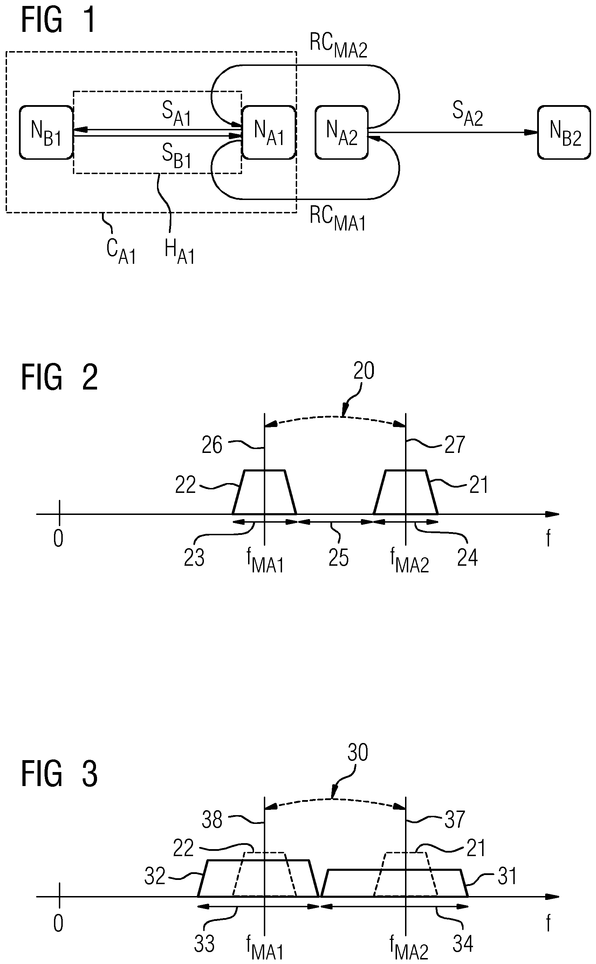

In der Figur 1 ist ein erster Netzwerkknoten NA1 und ein zweiter Netzwerkknoten NA2 gezeigt. NA1 sendet ein Kommunikationssignal SA1 zu einem anderen Netzwerkknoten NB1 über einen primären Nutzfrequenzkanal fA1 und bildet mit dem Netzwerkknoten NB1 eine Teilstrecke HA1 mit einer Simplex-Verbindung innerhalb einer Kommunikationszelle CA1, die sich durch die Nutzung des Nutzfrequenzkanals fA1 auszeichnet. In ähnlicher Weise ist der Netzwerknoten NA2 mit dem Netzwercknoten NB2 verbunden. Der Netzwerkknoten NB1 sendet ein Kommunikationssignal SB1 zu dem Netzwerkknoten NA1 über denselben primären Nutzfrequenzkanal fA1, indem er den Nutzfrequenzkanal fA1 abwechselnd nach dem Master-Slave-Prinzip mit dem Netzwerkknoten NA1 oder nach einem anderen Zeitmultiplexverfahren benutzt. Dadurch wird mit dem Netzwerkknoten NB1 eine Teilstrecke HA1 auf Basis einer Halbduplex-Verbindung (engl. "half-duplex") bzw. einer Zeitduplex-Verbindung (engl. "time division duplex", TDD) innerhalb der Kommunikationszelle CA1 gebildet.

Der Netzwerkknoten NA1 kann weiterhin nach einem Zeitmultiplexverfahren (z. B. gemäß Master-Slave-Prinzip) über zumindest einen Teil desselben primären Nutzfrequenzkanals fA1 mit mehreren Netzwerkknoten NB1.1, NB1.2,usw. kommunizieren und somit eine Kommunikationszelle CA1 mit mehreren entsprechenden Teilstrecken HA1.1, HA1.2, usw. bilden (aus Gründen der Übersichtlichkeit nicht gezeigt in der Zelle CA1 in Figur 1).

Im Folgenden sind die weiteren Ausführungen zu weiteren Kommunikationszellen und -teilstrecken teilweise nicht figürlich dargestellt, es werden jedoch Bezugszeichen vergeben, um die einzelnen Komponenten eindeutig zu benennen und ein Verständnis zu erleichtern.

Der Netzwerkknoten NB1 sendet ein Kommunikationssignal SB1 zu dem Netzwerkknoten NA1 über einen weiteren primären Nutzfrequenzkanal fB1, der sich im Frequenzbereich im Sinne des (O) FDM mit dem ersten primären Nutzfrequenzkanal fA1 nicht überlappt, und bildet dadurch mit dem Netzwerkknoten NA1 eine weitere Teilstrecke HB1. Die beiden Teilstrecken HA1 und HB1 können eine Frequenzduplex-Verbindung (engl. "frequency division duplex", FDD) HAB1 zwischen den Netzwerkknoten NA1 und NB1 innerhalb der Kommunikationszelle CAB1 bilden. In einer Weiterbildung kann der Netzwerkknoten NA1 nach einem Zeitmultiplexverfahren (z. B.: gemäß Master-Slave-Prinzip) über die gleichen primären Nutzfrequenzkanäle fA1 und fB1 mit mehreren Netzwerkknoten NB1.1, NB1.2, usw. kommunizieren und somit eine Kommunikationszelle CAB1 mit mehreren entsprechenden FDD-Teilstrecken HAB1.1, HAB1.2,usw. bilden. Auf die gleich Art und Weise können weitere Kommunikationszellen gebildet werden, in denen primäre Nutzfrequenzkanäle genutzt werden, die sich im Nutzfrequenzbereich im Sinne des (O) FDM nicht überlappen oder sogar Lücken im Nutzfrequenzbereich aufweisen.

Analog zu NA1 sendet der Netzwerkknoten NA2 über einen eigenen primären Nutzfrequenzkanal fA2 ein Kommunikationssignal SA2 aus. Zusätzlich sendet er ein Kommunikationssignal SMA2 über einen sekundären Übertragungskanal RCMA2, das Informationen über die Daten-/Signalübertragung im primären Nutzfrequenzkanals fA2 enthält. Vor Allem sind es Informationen über die derzeitige und die beabsichtigte Belegung des Nutzfrequenzbereichs durch den Nutzfrequenzkanal fA2.

Der Nutzfrequenzbereich, der in den Kommunikationszellen benutzt wird, wird auch als Nutzfrequenzressource(n) bezeichnet und kann im Allgemeinen aus mehreren Nutzfrequenzteilbereichen bestehen, die im Sinne der Frequenznutzung durch ein aus mehreren Kommunikationszellen bestehendes System als ein zusammenhängender lückenloser Nutzfrequenzbereich zu betrachten sind. Im Folgenden beziehen sich die Bezeichnungen "lückenlos", "Nutzfrequenzlücke", "benachbarte Nutzfrequenzbereiche/-kanäle", "nächster Nutzfrequenzkanal" u. Ä. bei der Betrachtung von Nutzfrequenzkanälen (z. B. fA1, fB1, fAB1) auf einen Nutzfrequenzbereich, der keine Frequenzlücken aufweist. Ein nächster Nutzfrequenzkanal aus dem Nutzfrequenzbereich ist ein Frequenzkanal aus einem benachbarten (höhere oder tiefere Frequenz im Frequenzspektrum) Nutzfrequenzteilbereich. Ggf. kann sich jedoch in einem realen Netzwerk eine Frequenzlücke ergeben, wenn es Teilbereich des Frequenzbandes nicht zur Nutzung vorgesehen wurde und entsprechend den Datenkommunikationsvorrichtungen nicht zur Verfügung steht.

Zusätzlich zu einem Kommunikationssignal SA1 im primären Nutzfrequenzkanal fA1 sendet ein Netzwerkknoten NA1 ein Kommunikationssignal SMA1 über einen sekundären Übertragungskanal RCMA1, das Informationen über die Daten-/ Signalübertragung im primären Nutzfrequenzkanal fA1 enthält. Vor Allem sind es Informationen über die derzeitige und die beabsichtigte Belegung des Nutzfrequenzbereichs durch den Nutzfrequenzkanal fA1.

Der sekundäre Übertragungskanal RCMA1 kann mittels eines der bekannten Kanalmultiplexverfahren (insbesondere mittels TDMA, CDMA, (O) FDMA oder deren Kombination) mit dem primären Nutzfrequenzkanal fA1 in demselben Frequenzbereich kombiniert oder als ein eigenständiger sekundärer Nutzfrequenzkanal fMA1 ausgebildet sein. Im letzteren Fall kann der sekundäre Nutzfrequenzkanal fMA1 sich im Sinne des (O) FDM als unabhängiger Nutzfrequenzkanal innerhalb des durch den primären Nutzfrequenzkanal fA1 belegten Teils des Nutzfrequenzbereichs oder separat befinden. Gleiches gilt analog für den sekundären Übertragungskanal RCMB1 und den primären Nutzfrequenzkanal fB1.

In ähnlicher Weise sendet ein Netzwerkknoten NB1 aus zusätzlich zu einem Kommunikationssignal SB1 im primären Nutzfrequenzkanal fB1 ein Kommunikationssignal SMB1 über einen sekundären Übertragungskanal RCMB1, das Informationen über die Daten-/Signalübertragung im primären Nutzfrequenzkanal fB1 enthält. Vor Allem sind es Informationen über die derzeitige und die beabsichtigte Belegung des Nutzfrequenzbereichs durch den Nutzfrequenzkanal fB1.

Die Grundidee für das erfindungsgemäße Verfahren einer dynamischen Nutzfrequenzkanalbelegung wird im Folgenden anhand von Figur 2 und 3 erläutert. Bei Anwendung des erfindungsgemäßen Verfahrens tauschen die entsprechenden Datenübertragungsvorrichtungen über die beiden sekundären Kanäle fMA1 26 und fMA2 27 Belegungsinformationen aus (angedeutet durch gestrichelten Pfeil 20). Im nutzbaren Frequenzband ergibt sich eine ungenutzte Frequenzlücke 25, die einen Frequenzabstand im Sinne der Erfindung zwischen den Kanälen angibt. Der primäre Kanal 22 hat eine Breite 23 und der primäre Kanal 21 hat eine Breite 24 im Frequenzspektrum. Durch die Kegelstumpfform der Kanäle wird angedeutet, dass bei einem realen Frequenzkanal aufgrund der technischen Umsetzung in gängigen Sendern in den Randbereichen der Kanäle nicht die ansonsten mögliche Amplitude erreicht werden kann.

In Figur 3 ist dargestellt, wie die primären Kanäle 31,32 bzw. fA1, fA2 durch Kommunikation 30 über die sekundären Kanäle fMA1, fMA2 angepasst wurden. Zum Vergleich sind noch die Kanalformen 21,22 aus Figur 2 gestrichelt gezeigt. Mittels des erfindungsgemäßen Verfahrens wurde die Frequenzlücke 25 geschlossen, so dass die neuen Kanäle 31,32 direkt aneinander stoßen. Der Frequenzabstand im Sinne der Erfindung ist damit im Wesentlichen auf null verringert. Die beiden Kanäle wurden verbreitert, so dass nun der Kanal 32 die Breite 33 und der Kanal 31 die Breite 34 aufweist. In diesem Beispiel ergeben sich bedingt durch technische Eigenschaften üblicher Sendevorrichtungen geringere Amplituden bei Verbreitung der Kanäle im Vergleich zur Figur 2, so dass die neuen Kanäle 31,32 mit geringerer Amplitude gesendet werden als die ursprünglich belegten Kanäle 21,22. Dabei verbleiben die sekundären Kanäle 37,38 bzw. fMA1, fMA2 an den gleichen Positionen im Frequenzspektrum wie in Figur 2.

Die beiden Vorrichtungen NA1,NA2 in der Figur 1 bilden zwei benachbarte Simplex-Übertragungsstrecken aus. Bei einer Frequenzplanung werden dem Netzwerkknoten NA1 ein primärer Nutzfrequenzkanal fA1 mit einer Anfangsbandbreite BA1.0 für das Aussenden des Signals SA1, ein sekundärer Nutzfrequenzkanal fMA1 für das Aussenden des Signals SMA1 und ein sekundärer Nutzfrequenzkanal fMA2 für den Empfang des Signals SMA2 jeweils per Parametrierung zugeordnet. Das Signal SMA2 wird vom Netzwerkknoten NA2 über dessen sekundären Nutzfrequenzkanal fMA2 ausgesendet. Per Parametrierung wird beim Netzwerkknoten NA1 festgelegt, dass der primäre Nutzfrequenzkanal fA2 des Netzwerkknoten NA2 im Frequenzbereich in der nächsten Nachbarschaft beispielsweise oberhalb des primären Nutzfrequenzkanals fA1 platziert ist. Auch dem Netzwerkknoten NA2 wird bei der Frequenzplanung ein primärer Nutzfrequenzkanal fA2 mit einer Anfangsbandbreite BA2.0 fürs Aussenden des Signals SA2, ein sekundärer Nutzfrequenzkanal fMA2 fürs Aussenden des Signals SMA2 und ein sekundärer Nutzfrequenzkanal fMA1 für den Empfang des Signals SMA1 per Parametrierung zugeordnet. Das Signal SMA1 wird vom Netzwerkknoten NA1 über dessen sekundären Nutzfrequenzkanal fMA1 ausgesendet. Per Zuordnung wird dem Netzwerkknoten NA2 mitgeteilt, dass der primäre Nutzfrequenzkanal fA1 des Netzwerkknoten NA1 im Frequenzbereich in der nächsten Nachbarschaft beispielsweise unterhalb des primären Nutzfrequenzkanals fA2 platziert ist. Die Informationen über die aktuelle nominelle Belegung des Nutzfrequenzbandes durch den primären Nutzfrequenzkanal fA1 empfängt der NA2 regelmäßig vom NA1 über den fMA1. Andererseits erhält NA1 vom NA2 über den fMA2 regelmäßig die aktuelle nominelle Belegung des Nutzfrequenzbandes durch den primären Nutzfrequenzkanal fA2.

Wenn anhand der übermittelten Informationen durch einen der beiden Netzwerkknoten eine noch nicht belegte Nutzfrequenzlücke zwischen den Nutzfrequenzkanälen fA1 und fA2 erkannt wird, versucht dieser Netzwerkknoten die freien Nutzfrequenzen (Nutzfrequenzsubkanäle) zumindest schrittweise zu belegen. Dafür sendet er dem anderen Netzwerkknoten Informationen über die geplante Belegung (z.B. die Werte der künftigen Nutzfrequenzbandgrenzfrequenzen o. Ä.). Wenn die wechselseitig übermittelten Absichten der beiden Netzwerkknoten zur keiner Überlappung der künftigen fA1 und fA2 im Frequenzbereich führen würden, belegt der erwähnte Netzwerkknoten wie beabsichtigt die freien Nutzfrequenzen und sendet nun regelmäßig die aktualisierte nominelle Belegung des Nutzfrequenzbandes auf seinem primären Nutzfrequenzkanal (z. B. fA1 oder fA2). Es sei angemerkt, dass die nominelle Belegung der Nutzfrequenzen wie eine Verbreiterung des nominell benutzten Nutzfrequenzkanals erfolgt.

Wenn die wechselseitig übermittelten Absichten der beiden Netzwerkknoten zur einer Überlappung der künftigen fA1 und fA2 im Frequenzbereich führen würden (Kollision der Absichten), wird die Kanalbreite wieder verringert und eine erneute Abstimmung der betroffenen Knoten ausgelöst. Eine Annäherung in den Nutzfrequenzbelegungsabsichten wird auf eine kooperierende Art und Weise und möglichst effektiv erzielt. Da die Belegung der freien Nutzfrequenzkanäle unter der Prämisse der Nichtüberlappung/Berührung der im Nutzfrequenzbereich benachbarten Nutzfrequenzkanäle erfolgt, die auch als Kontaktinhibition der Nachbarfrequenzbänder bezeichnet wird, entstehen auch keine Kollisionen zwischen den benachbarten Nutzfrequenzkanälen.

Die beiden Netzwerkknoten NA1 und NA2 übermitteln wechselseitig über die fMA1 und fMA2 zusätzlich auch Informationen über die planmäßigen Übertragungsraten PRA1 bzw. PRA2, die im Zuge der Frequenzplanung jeweils für deren Nutzfrequenzkanäle fA1 und fA2 vorgesehen und bei der Inbetriebnahme der jeweiligen Netzwerkknoten parametriert wurden. Alternativ oder zusätzlich ist auch eine laufende Anpassung der Übertragungsraten an die Bedürfnisse der Datenübertragung in den primären Übertragungskanälen möglich.

Ferner können die aktuell erzielten Übertragungsraten TRA1 bzw. TRA2 auf den Übertragungsstrecken HA1 bzw. HA2 übermittelt werden. Alternativ oder zusätzlich können die im Zuge der Frequenzplanung jeweils für Nutzfrequenzkanäle fA1 und fA2 vorgesehenen planmäßigen Nutzfrequenzbandbreiten PBA1 bzw. PBA2 und die aktuell belegten Nutzfrequenzbandbreiten TBA1 bzw. TBA2 von den beiden Netzwerkknoten NA1 vom NA2 über die Kanäle fMA1 und fMA2 wechselseitig ausgetauscht werden.

Solche Informationen werden in einer Weiterbildung der Erfindung von jedem der Netzwerkknoten vor der Mitteilung seiner Absichten bzgl. der künftigen Frequenzbandbelegung bewertet bzw. berücksichtigt, um eine möglichst faire Aufteilung der zur Verfügung stehenden Nutzfrequenzressourcen unter Berücksichtigung der ursprünglichen Frequenzplanung (z. B. der planmäßigen Bandbreite und/oder der planmäßigen bzw. gewünschten Übertragungsrate) zu erzielen. Fair ist dabei beispielsweise ein im Wesentlichen entsprechend zur ursprünglichen Frequenzplanung zwischen Netzwerkknoten NA1 und NA2 aufgeteilter Nutzfrequenzbereich.

Es könnte beispielsweise der Fall eintreten, dass aufgrund der Berücksichtigung der bei der Frequenzplanung vorgesehenen Werte (wie beispielsweise PRA1, PRA2 und/oder PBA1, PBA2) zumindest einer der beiden Netzwerkknoten NA1 und NA2 seinen primären Nutzfrequenzkanal fA1 bzw. fA2 im Nutzfrequenzbereich zu schrumpfen beabsichtigt oder dass eine Verschiebung notwendig wird, um die vorher erwähnte faire Aufteilung der zur Verfügung stehenden Nutzfrequenzressourcen zu erzielen. Auch in dem Fall übermitteln die beiden Netzwerkknoten NA1 vom NA2 wechselseitig zunächst ihre Absichten über die fMA1 und fMA2. Wenn die Absichten der Netzwerknoten miteinander nicht kollidieren, werden sie umgesetzt bzw. die neue Belegung des Nutzfrequenzbandes durch das Aussenden der geänderten Informationen über die aktuelle Platzierung der Nutzfrequenzkanäle fA1 bzw. fA2 von den jeweiligen Netzwerkknoten bestätigt. Erst dann dürfen die dadurch frei gewordenen Nutzfrequenzen von den im Nutzfrequenzbereich benachbarten Netzwerkknoten belegt werden, wie in den Figuren 2 und 3 gezeigt. Anderenfalls wird versucht die Absichten über die Änderung der primären Nutzfrequenzkanäle anzupassen, bis es keine Kollision der Absichten beider Netzwerkknoten mehr gibt.

Sowohl in dem erläuterten Beispiel als auch in einem System, dass aus mehreren Netzwerkknoten mit Teilstrecken besteht, versuchen die Netzwerkknoten die Signalübertragung zu ihren Partnerknoten zu optimieren, d.h. die Übertragungsrate zu erhöhen und/oder die Bit-/Blockfehlerwahrscheinlichkeit zu verringern. Dies führt zu einer schrittweisen Verbreiterung der primären Nutzfrequenzkanäle, die auf den einzelnen Teilstrecken genutzt werden. In diesem Sinne werden die beiden Teilstrecken einer FDD-Verbindung allein für sich und in Abhängigkeit von der Optimierung der im Nutzfrequenzbereich benachbarten Teilstrecken optimiert. Auch die beiden Teilstrecken einer FDD-Verbindung können im Frequenzbereich benachbart sein. In diesem Fall wird die gleiche Vorgangsweise angewendet wie eingangs beschrieben.

Um eine beliebige Verschiebung der primären Nutzfrequenzkanäle fA1 und fA2 im Zuge der oben beschriebenen regelmäßigen Optimierung bzw. des Anpassungsprozesses zu vermeiden, können bei der Frequenzplanung zumindest einem der Netzwerkknoten (z. B. NA1) Beschränkungen hinsichtlich einer möglichen Platzierung seiner primären Nutzfrequenzkanäle (z. B. fA1) im Frequenzspektrum auferlegt werden. Eine solche Beschränkung könnte beispielsweise die Bedingung sein, dass ein Netzwercknoten seinen lückenlosen primären Nutzfrequenzkanal fA1 immer um eine vorher per Parametrierung festgelegte Nutzfrequenz (sog. Ankerfrequenz) oder um den im Nutzfrequenzbereich fix platzierten sekundären Nutzfrequenzkanal (sog. Ankerfrequenzkanal) platzieren muss. Eine andere alternative Beschränkung wäre eine Festlegung von Nutzfrequenzschranken per Parametrierung im sendenden Netzwerkknoten, zwischen denen ein primärer Nutzfrequenzkanal platziert werden darf.

Wenn in einem solchen System eine neue Teilstrecke bzw. Kommunikationszelle installiert wird, die zumindest einen neuen primären Nutzfrequenzkanal und zumindest einen neuen sekundären Nutzfrequenzkanal aufweist, erhalten die Netzwerknoten der neuen Teilstrecke per Parametrierung Informationen über die sekundären Nutzfrequenzkanäle jener Netzwerkknoten, die im Nutzfrequenzbereich zu dem neuen primären Nutzfrequenzkanal am Nächsten und somit Nutzfrequenzkanalnachbar sind, so dass eine Koordinierung hinsichtlich der Netzfrequenzkanalnutzung erforderlich ist. Zusätzlich werden auch die Nutzfrequenzkanalnachbarn, oder zumindest ein Anteil der Nutzfrequenzkanalnachbarn, der neuen Teilstrecke per Parametrierung Informationen über den neuen sekundären Nutzfrequenzkanal erhalten. Dadurch wird den Netzwerkknoten ermöglicht, sich wechselseitig mit den jeweiligen Nutzfrequenzkanalnachbarn bei der Belegung des Nutzfrequenzbereichs durch primäre Nutzfrequenzkanäle zu koordinieren.

Sollte ein Netzwerkknoten bzw. eine Teilstecke oder sogar eine komplette Kommunikationszelle außer Betrieb sein, belegen die Nutzfrequenzkanalnachbarn die dadurch zumindest vorübergehend frei gewordenen Nutzfrequenzbereiche nicht zur Gänze, um bei einer Aufnahme des Betriebs eine neuerliche Nutzung des betreffenden Nutzfrequenzkanals zu ermöglichen. Alternativ könnten die Vorrichtungen an den Grenzen des zuletzt belegten primären Nutzfrequenzkanals des ausgefallenen Knotens verharren, bis dieser wieder aktiv wird oder eine vorher festgelegte Zeitspanne verstrichen ist.

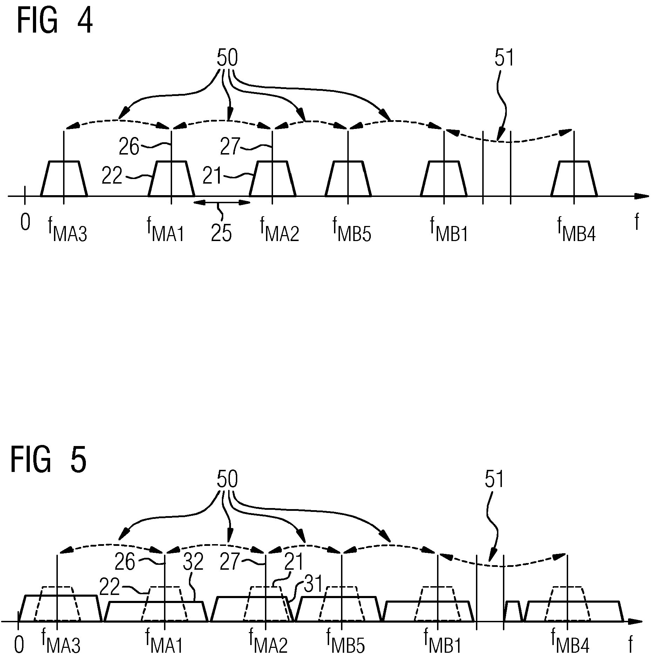

Wenn mehrere Kanäle benachbart angeordnet sind, die optimiert werden, so ergibt sich ein Ausgangszustand wie in Figur 4 gezeichnet. Es sind neben den sekundären Kanälen fMA1 und fMA2 weitere Kanäle fMA3, fMB5, fMB1 und fMB4 sowie ein nicht für die Nutzung zur Verfügung stehender Frequenzbereich 51 vorhanden. Die durch Kegelstümpfe dargestellten primären Kanäle weisen unterschiedliche Frequenzabstände zueinander und zu dem Frequenzbereich 51 auf. Wird das erfindungsgemäße Verfahren angewendet, so ergibt sich in Figur 5 eine neue Kanalbelegung, die lückenlos das ganze Frequenzspektrum zur Datenübertragung nutzbar macht. Nur der nicht zur Datenkommunikation vorgesehene Bereich 51 bleibt unbelegt.

In einem weiteren Beispiel soll nun auf eine erfindungsgemäße Anpassung der Frequenzkanäle bei drei benachbarten Simplex-Übertragungsstrecken eingegangen werden. Dem Netzwerkknoten NA1 werden nun ein primärer Nutzfrequenzkanal fA1 mit einer Anfangsbandbreite BA1.0 für das Aussenden des Signals SA1, ein sekundärer Nutzfrequenzkanal fMA1 für das Aussenden des Signals SMA1, ein sekundärer Nutzfrequenzkanal fMA2 für den Empfang des Signals SMA2 und ein weiterer sekundärer Nutzfrequenzkanal fMA3 für den Empfang des Signals SMA3 per Parametrierung zugeordnet. Die Signale SMA2 und SMA3 werden von den Netzwerkknoten NA2 bzw. NA3 über deren sekundäre Nutzfrequenzkanäle fMA2 bzw. fMA3 ausgesendet. Per Parametrierung wird dem Netzwerkknoten NA1 mitgeteilt, dass der primäre Nutzfrequenzkanal fA2 des Netzwerkknotens NA2 im Frequenzbereich in der nächsten Nachbarschaft beispielsweise oberhalb des primären Nutzfrequenzkanals fA1 und dass der primäre Nutzfrequenzkanal fA3 des Netzwerkknotens NA3 im Frequenzbereich in der nächsten Nachbarschaft beispielsweise unterhalb des primären Nutzfrequenzkanals fA1 platziert sind.

Einem zweiten Netzwerkknoten NA2 wird bei der Frequenzplanung ein primärer Nutzfrequenzkanal fA2 mit einer Anfangsbandbreite BA2.0 für das Aussenden des Signals SA2, ein sekundärer Nutzfrequenzkanal fMA2 für das Aussenden des Signals SMA2 und ein sekundärer Nutzfrequenzkanal fMA1 für den Empfang des Signals SMA1 per Parametrierung zugeordnet. Das Signal SMA1 wird vom Netzwerkknoten NA1 über dessen sekundären Nutzfrequenzkanal fMA1 ausgesendet. Per Zuordnung wird dem Netzwercknoten NA2 mitgeteilt, dass der primäre Nutzfrequenzkanal fA1 des Netzwerkknoten NA1 im Frequenzbereich in der nächsten Nachbarschaft beispielsweise unterhalb des primären Nutzfrequenzkanals fA2 platziert ist. Einem dritten Netzwerkknoten NA3 wird bei der Frequenzplanung ein primärer Nutzfrequenzkanal fA3 mit einer Anfangsbandbreite BA3.0 für das Aussenden des Signals SA3, ein sekundärer Nutzfrequenzkanal fMA3 für das Aussenden des Signals SMA3 und ein sekundärer Nutzfrequenzkanal fMA1 für den Empfang des Signals SMA1 per Parametrierung zugeordnet. Das Signal SMA3 wird vom Netzwerkknoten NA3 über dessen sekundären Nutzfrequenzkanal fMA3 ausgesendet. Per Parametrierung wird dem Netzwerkknoten NA3 mitgeteilt, dass der primäre Nutzfrequenzkanal fA1 des Netzwercknoten NA1 im Frequenzbereich in der nächsten Nachbarschaft beispielsweise oberhalb des primären Nutzfrequenzkanals fA3 platziert ist.

Die Informationen über die aktuelle nominelle Belegung des Nutzfrequenzbandes durch den primären Nutzfrequenzkanal fA1 empfangen NA2 bzw. NA3 regelmäßig vom NA1 über den fMA1. Andererseits erhält NA1 vom NA2 und vom NA3 über fMA2 bzw. fMA3 regelmäßig die aktuellen Informationen über die Belegung des Nutzfrequenzbandes durch die primären Nutzfrequenzkanäle fA2 bzw. fA3. Während in dieser Konstellation die Netzwerkknoten NA2 und NA3 jeweils nur mit einem Frequenznachbarn kommunizieren (NA1), kommuniziert der Netzwerkknoten NA1 mit beiden seinen Frequenznachbarn (NA2 und NA3), um seine Übertragungsstrecke zu optimieren. Für die Aufteilung der Frequenzressourcen an den Grenzen des primären Nutzfrequenzkanals fA1 mit seinen Frequenznachbarn verwendet der Netzwerkknoten NA1 jeweils die gleiche Methode wie erläutert. Dabei gibt es jedoch den Unterschied, dass die daraus resultierende Nutzfrequenzkanalanpassungsabsicht des Netzwerkknotens NA1 die Nutzfrequenzkanalanpassungsabsichten seines Frequenznachbarn berücksichtigt, d. h. beabsichtigte Veränderungen an der oberen bzw. der unteren Grenze des primären Nutzfrequenzkanal fA1 bestimmen letztendlich die Bandbreite des primären Nutzfrequenzkanals fA1 und seine Position im Nutzfrequenzbereich.

In einem weiteren Beispiel soll auf eine dynamische Frequenzkanalbelegung einer FDD-Verbindung eingegangen werden. Dafür werden die beiden Teilstrecken HA1 und HB1 als unabhängige Simplex-Übertragungsstrecken betrachtet. Jede der beiden Teilstrecken hat eigene primären Nutzfrequenzkanäle fA1 bzw. fB1 mit einer Anfangsbandbreite BA1.0 bzw. BB1.0, und eigene sekundäre Nutzfrequenzkanäle fMA1 bzw. fMB1. Außerdem kann der Netzwerknoten NA1 aus dem sekundären Nutzfrequenzkanal fMA2 und ev. einem weiteren sekundären Nutzfrequenzkanal fMA3 Informationen von den Netzwerkknoten NA2 bzw. NA3 empfangen, deren primäre Nutzfrequenzkanäle mit dem fA1 im Frequenzbereich oberhalb bzw. unterhalb benachbart sind. Der Netzwerknoten NB1 kann seinerseits aus dem sekundären Nutzfrequenzkanal fMB4 und ev. einem weiteren sekundären Nutzfrequenzkanal fMB5 Informationen von den Netzwerkknoten NB4 bzw. NB5 empfangen, deren primäre Nutzfrequenzkanäle mit dem fB1 im Frequenzbereich oberhalb bzw. unterhalb benachbart sind.

Die dynamische Frequenzkanalbelegung auf der jeweiligen Teilstrecke (HA1 und HB1) erfolgt unmittelbar unabhängig voneinander und auf die gleiche Art und Weise wie in vorherigen Beispielen beschrieben, es sei denn, fA1 bzw. fB1 sind im benachbart im Nutzfrequenzbereich.

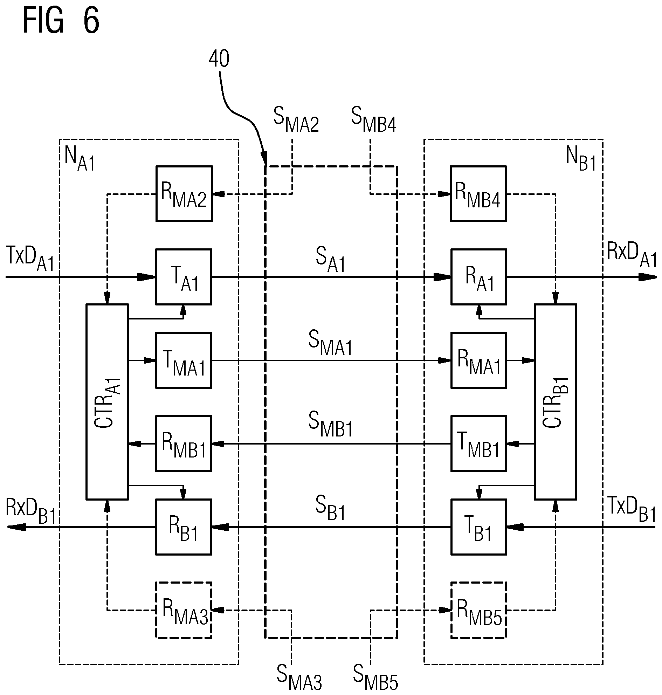

Figur 6 zeigt ein Beispiel für einen Prinzipaufbau und eine Frequenzkanalbelegung zwischen zwei Datenübertragungsvorrichtungen NA1 und NB1. Dabei werden zwischen den Datenübertragungsvorrichtungen auf einer Übertragungsstrecke 40 die Kanäle SA1,SMA1,SMB1 und SB1 benutzt. Es sind für jeden Kanal jeweils schematisch ein Empfänger (RA1,RMA1,RMB1,RB1,RMA2,RMA3,RMB4,RMB5) und ein Sender (TA1,TMA1,TMB1,TB1) vorhanden. Jede Datenübertragungsvorrichtung weist eine Kontrolleinrichtung CTRA1,CTRB1 auf. TxDA1 sind Nutzdaten, die auf dem Primärkanal A1 von NA1 zu NB1 übermittelt und dort als empfangene Daten RxDA1 bereit gestellt werden. TxDB1 sind Nutzdaten, die auf dem Primärkanal B1 von NB1 zu NA1 übermittelt und dort als empfangene Daten RxDB1 bereit gestellt werden. Benachbarte Frequenzkanäle gemäß Figur 5 übermitteln ihre Belegungsinformationen über die Signale SMA2,SMB4,SMA3 und SMB5.

Bei diesem Ausführungsbeispiel der FDD-Verbindung ist in den gemäß Fig. 4 bis 6 wird folglich dargestellt, wie insbesondere eine FDD-Verbindung zwischen den Netzwerknoten NA1 und NB1 die genutzten primären Nutzfrequenzkanäle automatisch belegt. Die FDD-Verbindung ermöglicht eine bidirektionale Verbindung (Übertragung und Empfang von Daten) als TxDA1 bzw. RxDB1 und RxDA1 bzw. TxDB1 über die primären Nutzfrequenzkanäle fA1 bzw. fB1.

In einer Weiterbildung besteht das System aus mehreren FDD- oder TDD-Verbindungen, wobei die räumlich definierten Frequenznachbarn miteinander Informationen austauschen, um die Belegung des Nutzfrequenzbereiches durch deren primären Nutzfrequenzkanäle besser anzupassen. Wenn eine direkte Kommunikation zwischen den im Zuge der Frequenzplanung festgelegten Frequenznachbarn (Netzwerkknoten) nicht möglich ist, können sie über weitere Netzwerknoten, die zu den FDD- oder TDD-Verbindungen gehören, kommunizieren.

## Patentansprüche

1. Verfahren zur Datenübertragung über eine Hoch- oder Mittelspannungsleitung, bei dem einer ersten Datenübertragungsvorrichtung (NA1) ein erster primärer Frequenzkanal (A1) und einer zweiten Datenübertragungsvorrichtung (NA2) ein zweiter primärer Frequenzkanal (A2) zur Datenübertagung zugeordnet werden, wobei die beiden primären Frequenzkanäle (A1, A2) jeweils vorgegebene Frequenzkanalgrenzen und einen Frequenzabstand (25) aufweisen, welcher einen vorher festgelegten maximalen Frequenzabstand unterschreitet, wodurch die beiden primären Frequenzkanäle (A1, A2) als benachbart bezeichnet werden, **dadurch gekennzeichnet, dass** die beiden Datenübertragungsvorrichtungen (NA1, NA2) jeweils über einen sekundären Frequenzkanal (RCMA1, RCMA2) eine Frequenzkanal-Belegungsinformation übermitteln, die der jeweils anderen Datenübertragungsvorrichtung (NA1, NA2) den selbst genutzten primären Frequenzkanal (A1, A2) und die jeweiligen Frequenzkanalgrenzen angibt, dass die Frequenzkanalgrenzen der beiden primären Frequenzkanäle (A1, A2) von den Datenübertragungsvorrichtungen (NA1, NA2) derart verändert werden, dass die Frequenzkanäle (A1, A2) verbreitert werden, indem der Frequenzabstand (25) vermindert wird, dass die Datenübertragungsvorrichtungen (NA1, NA2) eine aktualisierte Belegungsinformation aussenden und erkennen, dass sich bei einer Umsetzung der Frequenzkanalnutzung gemäß der aktualisierten Belegungsinformation eine Überlappung der veränderten Frequenzkanäle (A1, A2) ergeben würde, und dass die Datenübertragungsvorrichtungen (NA1, NA2) die jeweiligen Frequenzkanalbreiten derart verändern, dass keine Überlappung auftritt.

2. Verfahren nach Anspruch 1, **dadurch gekennzeichnet, dass** der Frequenzabstand so weit vermindert wird, dass die verbreiterten primären Frequenzkanäle (A1, A2) im Frequenzspektrum direkt aneinanderstoßen.

3. Verfahren nach Anspruch 1 oder 2, **dadurch gekennzeichnet, dass** die Datenübertragungsvorrichtungen (NA1, NA2) den Frequenzabstand im Wesentlichen zu gleichen Teilen auf die beiden primären Frequenzkanäle (A1, A2) aufteilen.

4. Verfahren nach Anspruch 1 oder 2, **dadurch gekennzeichnet, dass** die Belegungsinformation zusätzlich eine vorgesehene Bandbreite und/oder eine vorgesehene Übertragungsrate des jeweiligen primären Übertragungskanals (A1, A2) aufweist, anhand derer die Datenübertragungsvorrichtungen (NA1, NA2) den Frequenzabstand derart auf die beiden primären Frequenzkanäle (A1, A2) aufteilen, dass für jeden der beiden primären Frequenzkanäle (A1, A2) die vorgesehene Bandbreite und/oder die vorgesehene Übertragungsrate erzielt wird.

5. Verfahren nach einem der vorherigen Ansprüche, **dadurch gekennzeichnet, dass** mindestens einer der beiden Frequenzkanäle (A1, A2) als Anker-Frequenzkanal derart festgelegt ist, dass zwar eine Veränderung der Frequenzkanalgrenzen, jedoch keine komplette Verschiebung des Frequenzkanals (A1, A2) jenseits des Ankerkanals möglich ist.

6. Verfahren nach einem der der vorhergehenden Ansprüche, **dadurch gekennzeichnet, dass** in einem Netzwerk mit einer Mehrzahl von Datenübertragungsvorrichtungen (NA1, NA2), bei Ausfall einer Datenübertragungsvorrichtung (NA1, NA2), die dieser Datenübertragungsvorrichtung (NA1, NA2) zugeordneten Frequenzkanäle (A1, A2) nicht vollständig auf andere Frequenzkanäle der verbliebenen Datenübertragungsvorrichtungen (NA1, NA2) aufgeteilt werden.

7. Verfahren nach einem der vorhergehenden Ansprüche,
**dadurch gekennzeichnet, dass** die sekundären Frequenzkanäle (RCMA1, RCMA2) mit einer höheren Sendeleistung als der jeweiligen Sendeleistung der primären Frequenzkanäle (A1, A2) betrieben werden.

8. Verfahren nach einem der vorhergehenden Ansprüche,
**dadurch gekennzeichnet, dass** die sekundären Frequenzkanäle (RCMA1, RCMA2) mit einem anderen Übertragungsverfahren als die primären Frequenzkanäle (A1, A2) betrieben werden, das eine größere Reichweite der Signalübertragung in den sekundären Frequenzkanälen (RCMA1, RCMA2) bewirkt.

9. Verfahren nach einem der vorhergehenden Ansprüche,
**dadurch gekennzeichnet, dass** als sekundäre Frequenzkanäle (RCMA1, RCMA2) jeweils Schutzsignal-Frequenzkanäle verwendet werden.

10. System zur Datenübertragung über eine Hoch- oder Mittelspannungsleitung, bei dem eine erste Datenübertragungsvorrichtung (NA1) ausgebildet ist, auf einem ersten primären Frequenzkanal (A1) Daten zu übertragen, und eine zweite Datenübertragungsvorrichtung (NA2) ausgebildet ist, auf einem zweiten primären Frequenzkanal (A2) Daten zu übertragen, wobei die beiden primären Frequenzkanäle (A1, A2) jeweils vorgegebene Frequenzkanalgrenzen und einen Frequenzabstand (25) aufweisen, welcher einen vorher festgelegten maximalen Frequenzabstand unterschreitet, wodurch die beiden primären Frequenzkanäle (A1, A2) als benachbart bezeichnet werden, **dadurch gekennzeichnet, dass** die beiden Datenübertragungsvorrichtungen (NA1, NA2) ausgebildet sind, jeweils über einen sekundären Frequenzkanal (RCMA1, RCMA2) eine Frequenzkanal-Belegungsinformation zu übermitteln, die der jeweils anderen Datenübertragungsvorrichtung (NA1, NA2) den selbst genutzten primären Frequenzkanal (A1, A2) und die jeweiligen Frequenzkanalgrenzen angibt, dass die Datenübertragungsvorrichtungen (NA1, NA2) ausgebildet sind, die Frequenzkanalgrenzen der beiden primären Frequenzkanäle (A1, A2) derart zu verändern, dass die Frequenzkanäle (A1, A2) verbreitert werden, indem der Frequenzabstand vermindert wird, und dass die Datenübertragungsvorrichtungen (NA1, NA2) ausgebildet sind, eine aktualisierte Belegungsinformation auszusenden und zu erkennen, dass sich bei einer Umsetzung der Frequenzkanalnutzung gemäß der aktualisierten Belegungsinformation eine Überlappung der veränderten Frequenzkanäle (A1, A2) ergeben würde, und die jeweiligen Frequenzkanalgrenzen derart zu verändern, dass keine Überlappung auftritt.

11. System nach Anspruch 10, **dadurch gekennzeichnet, dass** die Datenübertragungsvorrichtungen (NA1, NA2) ausgebildet sind, den Frequenzabstand so weit zu vermindern, dass die verbreiterten primären Frequenzkanäle (A1, A2) im Frequenzspektrum direkt aneinanderstoßen.

12. System nach Anspruch 10 oder 11, **dadurch gekennzeichnet, dass** die Datenübertragungsvorrichtungen (NA1, NA2) ausgebildet sind, den Frequenzabstand im Wesentlichen zu gleichen Teilen auf die beiden primären Frequenzkanäle (A1, A2) aufzuteilen.

13. System nach Anspruch 10 oder 11, **dadurch gekennzeichnet, dass** die Datenübertragungsvorrichtungen (NA1, NA2) ausgebildet sind, Belegungsinformation auszusenden, die zusätzlich eine vorgesehene Bandbreite und/oder eine vorgesehene Übertragungsrate des jeweiligen primären Übertragungskanals (A1, A2) angeben, wobei die Datenübertragungsvorrichtungen (NA1, NA2) anhand der Belegungsinformation den Frequenzabstand derart auf die beiden primären Frequenzkanäle (A1, A2) aufteilen, dass für jeden der beiden primären Frequenzkanäle (A1, A2) die vorgesehene Bandbreite und/oder die vorgesehene Übertragungsrate erzielt wird.

14. System nach einem der Ansprüche 10 bis 13, **dadurch gekennzeichnet, dass** mindestens eine der Datenübertragungsvorrichtungen (NA1, NA2) derart ausgebildet ist, dass der primäre Frequenzkanal (A1, A2) als Anker-Frequenzkanal festgelegt ist, so dass zwar eine Veränderung, jedoch keine komplette Verschiebung des Frequenzkanals (A1, A2) jenseits des Ankerkanals möglich ist.

15. System nach einem der Ansprüche 10 bis 14, **dadurch gekennzeichnet, dass** in einem Netzwerk mit einer Mehrzahl von Datenübertragungsvorrichtungen (NA1, NA2), bei Ausfall einer Datenübertragungsvorrichtung (NA1, NA2, die dieser Datenübertragungsvorrichtung (NA1, NA2) zugeordneten Frequenzkanäle nicht vollständig auf andere Frequenzkanäle (A1, A2) der verbliebenen Datenübertragungsvorrichtungen (NA1, NA2) aufgeteilt werden.

## Claims

1. Method for data transmission over a high or medium voltage line, in which a first primary frequency channel (A1) is assigned to a first data transmission device (NA1) and a second primary frequency channel (A2) is assigned to a second data transmission device (NA2) for data transmission, wherein the two primary frequency channels (A1, A2) each have predefined frequency channel limits and a frequency spacing (25) which is below a predetermined maximum frequency spacing, as a result of which the two primary frequency channels (A1, A2) are designated as adjacent, **characterised in that** the two data transmission devices (NA1, NA2) each transmit, via a secondary frequency channel (RCMA1, RCMA2), frequency channel occupancy information which specifies the primary frequency channel (A1, A2) they are themselves using and the respective frequency channel limits to the other data transmission device (NA1, NA2) in each case, that the frequency channel limits of the two primary frequency channels (A1, A2) are changed by the data transmission devices (NA1, NA2) such that the frequency channels (A1, A2) are widened by reducing the frequency spacing (25), that the data transmission devices (NA1, NA2) send out updated occupancy information and recognise that the changed frequency channels (A1, A2) would overlap if the frequency channel usage was implemented in accordance with the updated occupancy information, and that the data transmission devices (NA1, NA2) change the respective frequency channel widths such that no overlap occurs.

2. Method according to claim 1, **characterised in that** the frequency spacing is reduced to such an extent that the widened primary frequency channels (A1, A2) directly abut one another in the frequency spectrum.

3. Method according to claim 1 or 2, **characterised in that** the data transmission devices (NA1, NA2) divide the frequency spacing essentially in equal parts between the two primary frequency channels (A1, A2).

4. Method according to claim 1 or 2, **characterised in that** the occupancy information additionally has an intended bandwidth and/or an intended transmission rate of the respective primary transmission channel (A1, A2), on the basis of which the data transmission devices (NA1, NA2) divide the frequency spacing between the two primary frequency channels (A1, A2) such that for each of the two primary frequency channels (A1, A2) the intended bandwidth and/or the intended transmission rate is achieved.

5. Method according to one of the preceding claims, **characterised in that** at least one of the two frequency channels (A1, A2) is set as an anchor frequency channel such that although the frequency channel limits can be changed, the frequency channel (A1, A2) cannot be completely shifted beyond the anchor channel.

6. Method according to one of the preceding claims, **characterised in that** in a network with a plurality of data transmission devices (NA1, NA2), in the event of failure of one data transmission device (NA1, NA2), the frequency channels (A1, A2) assigned to this data transmission device (NA1, NA2) are not completely divided between other frequency channels of the remaining data transmission devices (NA1, NA2).

7. Method according to one of the preceding claims, **characterised in that** the secondary frequency channels (RCMA1, RCMA2) are operated with a higher transmission power than the respective transmission power of the primary frequency channels (A1, A2).

8. Method according to one of the preceding claims, **characterised in that** the secondary frequency channels (RCMA1, RCMA2) are operated with a different transmission method than the primary frequency channels (A1, A2), which brings about a greater range of the signal transmission in the secondary frequency channels (RCMA1, RCMA2).

9. Method according to one of the preceding claims, **characterised in that** protection signal frequency channels are used as secondary frequency channels (RCMA1, RCMA2).

10. System for data transmission over a high or medium voltage line, in which a first data transmission device (NA1) is embodied to transmit data on a first primary frequency channel (A1), and a second data transmission device (NA2) is embodied to transmit data on a second primary frequency channel (A2), wherein the two primary frequency channels (A1, A2) each have predetermined frequency channel limits and a frequency spacing (25) which is below a predetermined maximum frequency spacing, as a result of which the two primary frequency channels (A1, A2) are designated as adjacent, **characterised in that** the two data transmission devices (NA1, NA2) are each embodied to transmit, via a secondary frequency channel (RCMA1, RCMA2), frequency channel occupancy information which specifies the primary frequency channel (A1, A2) they are themselves using and the respective frequency channel limits to the other data transmission device (NA1, NA2) in each case, that the data transmission devices (NA1, NA2) are embodied to change the frequency channel limits of the two primary frequency channels (A1, A2) such that the frequency channels (A1, A2) are widened by reducing the frequency spacing, and that the data transmission devices (NA1, NA2) are embodied to send out updated occupancy information and to recognise that the changed frequency channels (A1, A2) would overlap if the frequency channel usage was implemented in accordance with the updated occupancy information, and to change the respective frequency channel limits such that no overlap occurs.

11. System according to claim 10, **characterised in that** the data transmission devices (NA1, NA2) are embodied to reduce the frequency spacing to such an extent that the widened primary frequency channels (A1, A2) directly abut one another in the frequency spectrum.

12. System according to claim 10 or 11, **characterised in that** the data transmission devices (NA1, NA2) are embodied to divide the frequency spacing essentially in equal parts between the two primary frequency channels (A1, A2).

13. System according to claim 10 or 11, **characterised in that** the data transmission devices (NA1, NA2) are embodied to send out occupancy information which additionally specifies an intended bandwidth and/or an intended transmission rate of the respective primary transmission channel (A1, A2), wherein using the occupancy information the data transmission devices (NA1, NA2) divide the frequency spacing between the two primary frequency channels (A1, A2) such that for each of the two primary frequency channels (A1, A2) the intended bandwidth and/or the intended transmission rate is achieved.

14. System according to one of claims 10 to 13, **characterised in that** at least one of the data transmission devices (NA1, NA2) is embodied such that the primary frequency channel (A1, A2) is defined as an anchor frequency channel so that a change, but not a complete shift, of the frequency channel (A1, A2) beyond the anchor channel is possible.

15. System according to one of claims 10 to 14, **characterised in that** in a network with a plurality of data transmission devices (NA1, NA2), in the event of failure of one data transmission device (NA1, NA2), the frequency channels (A1, A2) assigned to this data transmission device (NA1, NA2) are not completely divided between other frequency channels of the remaining data transmission devices (NA1, NA2) .

## Revendications

1. Procédé pour la transmission de données sur une ligne haute ou moyenne tension, dans lequel sont affectés à un premier dispositif de transmission de données (NA1) un premier canal de fréquence primaire (A1) et à un deuxième dispositif de transmission de données (NA2), un deuxième canal de fréquence primaire (A2) aux fins de la transmission de données, les deux canaux de fréquence primaires (A1, A2) présentant respectivement des limites de canal de fréquence données et un écart de fréquence (25) qui est inférieur à un écart de fréquence maximal fixé préalablement, de sorte que les deux canaux de fréquence primaires (A1, A2) sont qualifiés de voisins, **caractérisé en ce que** les deux dispositifs de transmission de données (NA1, NA2) transmettent, respectivement sur un canal de fréquence secondaire (RCMA1, RCMA2), une information d'occupation de canal de fréquence qui indique à l'autre dispositif de transmission de données respectif (NA1, NA2) le canal de fréquence primaire utilisé par elles-mêmes (A1, A2) et les limites de canal de fréquence respectives, **en ce que** les limites de canal de fréquence des deux canaux de fréquence primaires (A1, A2) sont modifiées de manière telle par les dispositifs de transmission de données (NA1, NA2) que les canaux de fréquence (A1, A2) sont élargis par réduction de l'écart de fréquence (25), **en ce que** les dispositifs de transmission de données (NA1, NA2) émettent une information d'occupation actualisée et reconnaissent que, en cas de mise en œuvre de l'utilisation de canal de fréquence conformément à l'information d'occupation actualisée, il se produirait un chevauchement des canaux de fréquence modifiés (A1, A2), et **en ce que** les dispositifs de transmission de données (NA1, NA2) modifient les largeurs de canal de fréquence respectives de manière telle qu'il ne se produit pas de chevauchement.

2. Procédé selon la revendication 1, **caractérisé en ce que** l'écart de fréquence est réduit au point que les canaux de fréquence primaires élargis (A1, A2) sont directement adjacents dans le spectre de fréquence.

3. Procédé selon la revendication 1 ou 2, **caractérisé en ce que** les dispositifs de transmission de données (NA1, NA2) répartissent l'écart de fréquence sensiblement en parties égales sur les deux canaux de fréquence primaires (A1, A2).

4. Procédé selon la revendication 1 ou 2, **caractérisé en ce que** l'information d'occupation comporte additionnellement une largeur de bande prévue et/ou un taux de transmission prévu du canal de transmission primaire respectif (A1, A2) à l'aide de laquelle les dispositifs de transmission de données (NA1, NA2) répartissent l'écart de fréquence de manière telle sur les deux canaux de fréquence primaires (A1, A2) qu'on obtient, pour chacun des deux canaux de fréquence primaires (A1, A2), la largeur de bande prévue et/ou le taux de transmission prévu.

5. Procédé selon l'une des revendications précédentes, **caractérisé en ce qu'**au moins l'un des deux canaux de fréquence (A1, A2) est déterminé de manière telle en tant que canal de fréquence d'ancrage qu'une modification des limites de canal de fréquence est certes possible, mais pas un décalage complet du canal de fréquence (A1, A2) au-delà du canal d'ancrage.

6. Procédé selon l'une des revendications précédentes, **caractérisé en ce que**, dans un réseau comportant une pluralité de dispositifs de transmission de données (NA1, NA2), en cas de défaillance d'un dispositif de transmission de données (NA1, NA2), les canaux de fréquence (A1, A2) affectés à ce dispositif de transmission de données (NA1, NA2) ne sont pas répartis entièrement sur d'autres canaux de fréquence des dispositifs de transmission de données restants (NA1, NA2).

7. Procédé selon l'une des revendications précédentes, **caractérisé en ce que** les canaux de fréquence secondaires (RCMA1, RCMA2) sont exploités avec une puissance d'émission supérieure à la puissance d'émission respective des canaux de fréquence primaires (A1, A2).

8. Procédé selon l'une des revendications précédentes, **caractérisé en ce que** les canaux de fréquence secondaires (RCMA1, RCMA2) sont exploités avec un autre procédé de transmission que les canaux de fréquence primaires (A1, A2), lequel entraîne une plus grande portée de la transmission de signal dans les canaux de fréquence secondaires (RCMA1, RCMA2) .

9. Procédé selon l'une des revendications précédentes, **caractérisé en ce que** sont respectivement utilisés, en tant que canaux de fréquence secondaires (RCMA1, RCMA2), des canaux de fréquence de signal de protection.

10. Système de transmission de données sur une ligne haute ou moyenne tension, dans lequel un premier dispositif de transmission de données (NA1) est conçu de manière à transmettre des données sur un premier canal de fréquence primaire (A1) et un deuxième dispositif de transmission de données (NA2) est conçu de manière à transmettre des données sur un deuxième canal de fréquence primaire (A2), les deux canaux de fréquence primaires (A1, A2) présentant respectivement des limites de canal de fréquence données et un écart de fréquence (25) qui est inférieur à un écart de fréquence maximal fixé préalablement, de sorte que les deux canaux de fréquence primaires (A1, A2) sont qualifiés de voisins, **caractérisé en ce que** les deux dispositifs de transmission de données (NA1, NA2) sont conçus pour transmettre, respectivement sur un canal de fréquence secondaire (RCMA1, RCMA2), une information d'occupation de canal de fréquence qui indique à l'autre dispositif de transmission de données respectif (NA1, NA2) le canal de fréquence primaire utilisé par elles-mêmes (A1, A2) et les limites de canal de fréquence respectives, **en ce que** les dispositifs de transmission de données (NA1, NA2) sont conçus pour modifier les limites de canal de fréquence des deux canaux de fréquence primaires (A1, A2) de manière telle que les canaux de fréquence (A1, A2) sont élargis par réduction de l'écart de fréquence, et **en ce que** les dispositifs de transmission de données (NA1, NA2) sont conçus pour émettre une information d'occupation actualisée et pour reconnaître que, en cas de mise en œuvre de l'utilisation de canal de fréquence conformément à l'information d'occupation actualisée, il se produirait un chevauchement des canaux de fréquence modifiés (A1, A2), et pour modifier les limites de canal de fréquence respectives de manière telle qu'il ne se produit pas de chevauchement.

11. Système selon la revendication 10, **caractérisé en ce que** les dispositifs de transmission de données (NA1, NA2) sont conçus pour réduire l'écart de fréquence au point que les canaux de fréquence primaires élargis (A1, A2) sont directement adjacents dans le spectre de fréquence.

12. Système selon la revendication 10 ou 11, **caractérisé en ce que** les dispositifs de transmission de données (NA1, NA2) sont conçus pour répartir l'écart de fréquence sensiblement en parties égales sur les deux canaux de fréquence primaires (A1, A2) .

13. Système selon la revendication 10 ou 11, **caractérisé en ce que** les dispositifs de transmission de données (NA1, NA2) sont conçus pour émettre une information d'occupation qui indique additionnellement une largeur de bande prévue et/ou un taux de transmission prévu du canal de transmission primaire respectif (A1, A2), les dispositifs de transmission de données (NA1, NA2) répartissant, à l'aide de l'information d'occupation, l'écart de fréquence de manière telle sur les deux canaux de fréquence primaires (A1, A2) qu'on obtient, pour chacun des deux canaux de fréquence primaires (A1, A2), la largeur de bande prévue et/ou le taux de transmission prévu.

14. Système selon l'une des revendications 10 à 13, **caractérisé en ce qu'**au moins l'un des dispositifs de transmission de données (NA1, NA2) est conçu de manière telle que le canal de fréquence primaire (A1, A2) est déterminé en tant que canal de fréquence d'ancrage, de sorte qu'une modification, mais pas un décalage complet du canal de fréquence (A1, A2) au-delà du canal d'ancrage est possible.

15. Système selon l'une des revendications 10 à 14, **caractérisé en ce que**, dans un réseau comportant une pluralité de dispositifs de transmission de données (NA1, NA2), en cas de défaillance d'un dispositif de transmission de données (NA1, NA2), les canaux de fréquence affectés à ce dispositif de transmission de données (NA1, NA2) ne sont pas répartis entièrement sur d'autres canaux de fréquence (A1, A2) des dispositifs de transmission de données restants (NA1, NA2).
